# EUROPEAN PATENT SPECIFICATION

(11) **EP 2 167 811 B1**
(45) Date of publication and mention of the grant of the patent: **29.02.2012**
(21) Application number: 08734528.6
(22) Date of filing: 07.05.2008
(51) Int. Cl.: F03B 13/20

(54) **WAVE ENERGY PLANT**
WELLENENERGIEANLAGE
INSTALLATION D'EXPLOITATION DE L'ÉNERGIE DES VAGUES

(30) Priority: 07.05.2007 DK 200700682
(43) Date of publication of application: 31.03.2010
(73) Proprietor: Dexa Wave Energy APS, 7500 Holstebro (DK)
(72) Inventor: CLAUSEN, Lars, Henning, DK-7500 Holstebro (DK)
(74) Representative: Tellefsen, Jens J.
(86) International application number: PCT/DK2008/000171
(87) International publication number: WO 2008/135046

(56) References cited:
- WO-A-00/17519
- WO-A-03/026954
- DE-A1- 4 310 997
- GB-A- 1 542 251
- GB-A- 2 113 311
- GB-A- 2 422 878
- US-A- 1 078 323
- US-A- 1 408 094
- US-A- 4 781 023

## Description

### Field of the Invention

The present invention concerns a wave energy plant of the type intended for locating in open waters, where the wave movement of the water acts on the wave energy plant for movement, where the plant consists of at least two floating bodies that are interconnected via a hinge, where the at least two floating bodies are free to move in relation to waves in the water and along a hinging line between the two floating bodies, the movement being transformed into energy by suitable means, for example mechanical rotational energy or electric energy.

### Description of Prior Art

It is commonly known to utilise wave energy for production of electric energy or another form of energy, e.g. mechanical energy, which is used for operating pumps, reverse osmosis plants, desalination plants or other. By these wave energy plants it is attempted to utilise the renewable energy which is inherent in the movements of the sea. This is interesting as this energy is renewable and pollution-free. Through the years, many different types of plants for utilising wave energy have been developed. Many of these have suffered the fate of being destroyed in rough weather, where the forces of the water exceeded the normal level many times. Other plants have had various mechanical weaknesses which particularly have been pronounced with regard to durability. On wave energy plants in sea water, an incredible resistance against corrosion and wear in general is required, and many plants have not been able to counter the hard conditions.

Common to many of the prior art plants is that there are a number of floating bodies which are mechanically connected to some form of "power plant" that may convert the movement of the waves to preferably mechanical rotational energy, or to other forms of kinetic energy. From US 4,464,578 is known a plant for utilising wave energy, where three floating bodies are connected by arms which are movably fixed to the floating bodies, where between each floating body and arm there is arranged a mechanism in which energy may be absorbed or received. This energy comes from the rocking movement occurring between the floating bodies themselves and the arms. It is so that between each floating body and arm there is a pivot point with a kind of rotary bearing, and that there is a "power plant" at each of these movable points. Such a plant is rather mechanically complicated, as there are many movable parts, and the plant therefore requires service relatively often.

A similar construction is known from US1,408,094. In this construction two platforms are provided with pontoons, and interconnected by a hinge structure. On each platform are provided one or more masts, arranged substantially perpendicular to the surface of the platforms. From the top ends of the masts a connecting member is arranged, which connects to a rocking member on the other platform. The rocking member is connected to a water pump which in turn by means of a tube, pumps water into a higher arranged reservoir, preferably arranged on land. When energy is needed, water is led from the reservoir through a landbased turbine. The installation is therefore suitable for use close to the coast and in more protected waters, as the masts and the tube severely limits the distance from the coast and the installations stability and suitability for implementation in the very harsh environment present further away from the coast. The wave action close to the coasts is furthermore not desirable for generating wave energy, as the waves due to the shallow water depth tends to be very short and relative high, such that the sea surface appears very choppy, whereas further out from the coast the waves are longer and less steep, such that the impact on the wave energy installations is more constant, regular and less damaging to the constructions.

A corresponding plant is known from WO 00/08334 where a number of floating bodies are arranged pivotably in relation to each other, such that waves or swells from different directions may act on the floating bodies, and the energy from the movements may be collected thereby. This design is relatively complicated, contains many wearing parts and is therefore expected to require extensive maintenance.

JP 56113058 indicates an installation where two floating bodies are mutually pivotably arranged, and where a shaft fastened at one floating body at one end and connected to a flywheel mounted on the other floating body is caused to move by the movement of the floating bodies, whereby rotational energy is generated. The design of the floating bodies entails an even distribution of the mass and thereby of the material consumption. This gives rise to a relatively heavy construction which is also relatively expensive to manufacture. The transmission of energy via shaft and flywheel requires many movable parts, where particularly flywheel designs are relatively vulnerable in the very aggressive marine environment. The result thus becomes a relatively heavy and expensive design with a great need for maintenance.

It is the purpose of the invention to indicate a solution for a wave energy plant where there are few movable parts and where the position of the plant can be regulated continuously, and where the wave movement is converted into usable kinetic energy.

### Description of the Invention

As mentioned in the introduction, the invention concerns a wave energy plant with at least two floating bodies, where each floating body is made up of at least two pontoons, preferably cylindric pontoons with a length larger than the diameter, where the pontoons are rigidly connected by rigid members, where at least one energy absorbing mechanism is arranged between two interhinged floating bodies. By such a plant is achieved the advantage that the number of movable parts is minimised, and that a plant according to the invention thus becomes more easy and rapid to service. Also, there is achieved the advantage that even by small waves, the floating bodies farthest from the energy absorbing mechanism are provided a substantial movement with a substantial force, as the plant can be designed with a relatively long lever arm from the outermost pontoon and to the hinge between the two joined floating bodies at which the energy is absorbed and transformed.

A preferred variant of a wave energy plant according to the invention is with an energy absorbing mechanism consisting of a hydraulic system where one or more hydraulic actuators are arranged so that the wave movement of the floating bodies causes a compressing or extension of the hydraulic actuator or actuators, where the actuators are disposed above water level and preferably on a rigid frame which is fixed to the floating bodies. Thereby is achieved easy access to the plant and particularly to the energy absorbing mechanism. This mechanism may typically consist of one or more hydraulic actuators which are connected with a network of hydraulic connections that conduct oil to and from the actuator and to a hydraulic motor which is used for operating other mechanical equipment.

In a particular variant of the invention, the said hydraulic system includes a hydraulic motor which is connected to an electric generator, a reverse osmosis plant, a desalination plant or another mechanism. By this variant it is thus possible to use the energy just for the desired process.

A wave energy plant according to the invention may advantageously be freely movably anchored to the sea bed and independent of the tide. By such an anchoring, the wave energy plant may be disposed freely in the stream and the waves with the right angle in relation to the waves. A typical anchorage is with a fixation to the sea bed, typically to a heavy object such as an anchor block, where the cable is possibly supported by a float fitted on the cable under the water level. From this float the cable runs to the wave energy plant to which it is fastened. By such a solution, the float on the cable will pull the plant into position after the passing of a wave, and the position of the wave energy plant will thus always be optimal.

In a particularly preferred variant of the invention, the wave energy plant is provided with at least one control means, preferably a yaw propeller, where the control means is controlled and regulated by means of input from a wave direction gauge. By such a device it is possible to keep the wave energy plant in perfect position in relation to the size and direction of the waves. The control means may, as mentioned, be a yaw propeller which can be electrically powered and supplied from a separate facility, or it may be supplied from the main plant of the wave energy plant.

In a preferred embodiment, the two floating bodies in the wave energy plant according to the invention are connected by a hinge made of a polymer, preferably of UV-protected polyurethane, in such a way that the two floating bodies are movable by an angle up to between 0° to 50° at each their side in relation to horizontal. By using a polymer hinge there is achieved the great advantage that there are no movable parts which are rapidly worn in the harsh environment. By making the hinge as one or more flexible strips which are fastened to each of the two floating bodies, there is achieved a cheap, simple, robust and not the least, maintenance-free solution. Moreover, the polymer hinge acts as a kind of shock absorber that keeps the two floating bodies at a safe distance. Hereby is ensured that possible blows by the action of large waves do not impact the wave energy plant so strongly. The large angle of movement of the hinge ensures that the floating bodies may easily follow the wave movements, irrespectively whether speaking of small or large waves.

By large and strong waves, the wave energy plant according to the invention may be adapted to move freely without absorbing the same amount of energy as by normal operation, alternatively not absorbing any energy at all. This is an advantage as the resistance, which is in the system for absorbing energy, may be too inert for the wave energy plant to keep up with absorbing the movements by itself. It may thus be an advantage to disengage or throttle down the wave energy plant in rough weather where extreme loads may occur. Such a throttling down may take place on the basis of measurements performed with equipment detecting e.g. wind force, wave height and/or wave frequency, and which on the background of these measurements relieves the hydraulic system.

A wave energy plant according to the invention may advantageously be with floating bodies made up of pontoons, where the pontoons are made of composite material, including concrete, preferably concrete reinforced by steel or fibres, glass fibre reinforced plastic, carbon fibre or aramide reinforced plastic or other types of composite material. By using these composite materials, strong pontoons may be achieved where the buoyancy of floating bodies/pontoons is balanced so that they are disposed optimally in the surface of the water. For a wave energy plant according to the invention it is particularly preferred to use pontoons made of concrete reinforced by steel or other suitable reinforcement. Such pontoons are made cheaply and at the same time they have the necessary weight for immediate disposition at the right level in the water.

Between the two pontoons constituting a floating body for a wave energy plant, according to the invention there are rigid members made of one or more of the following groups of material: metals; fibre composites; plastics. By using rigid connections between pontoons, a simple and robust design without movable parts to be serviced and maintained is ensured.

In a preferred embodiment of a wave energy plant according to the invention, each of the two floating bodies consists of two pontoons interconnected by rigid members, and where the hinge between two floating bodies is mounted between two adjacent pontoons. Thus is achieved the most advantageous operation of the wave energy plant, as the plant may thus be positioned advantageously in the water in relation to the wave direction, which then will be approximately perpendicular to the longitudinal direction of the pontoons. Also, the least loaded hinging is achieved, as the hinging line can be placed at exactly the same level at which the two floating bodies are moving in relation to each other - typically in the waterline.

### Short Description of the Drawing

The invention is described in more detail with reference to the drawing, wherein:
FIG. 1 shows an anchored wave energy plant.
FIG. 2 shows various situations of movement of a wave energy plant.

### Detailed Description of the Invention

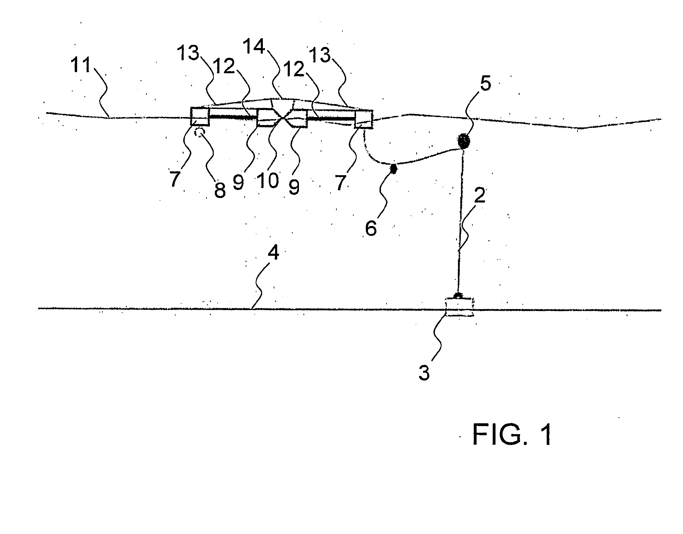

In Fig. 1 is seen a wave energy plant 1 which via a cable 2 is anchored to an anchor block 3 at the sea bed 4. The cable 2 is carried by a large float 5 from which the cable 2 extends to the wave energy plant 1. On the cable 2 between the large float 5 and the wave energy plant 1, an additional small float 6 is fitted. In the shown variant, the cable 2 is fastened to the one of the outermost pontoons 7. At the lower side of the other of the outermost pontoons 7, a yaw propeller 8 is mounted to be used for positioning the wave energy plant 1 relative to the wave direction. Between the two innermost pontoons 9, there is a not shown hinge 10 disposed at the waterline 11 and connecting the two floating bodies which consist of two pontoons 7 and 9 interconnected by rigid members 12. The rigid members can be made of various suitable materials, but are preferred made of a fibre reinforced composite material, such as glass fibre reinforced polyester or carbon fibre reinforced epoxy, or similar.

The hinge 10 is made of a UV-protected polymer and is flexible so that the two floating bodies 7, 9 at each side of the hinge 10 can follow the waves. Upon each floating body 7, 9 there is further mounted a reinforcing frame 13 and between which the energy absorbing mechanism itself 14 for absorbing the wave movement is located.

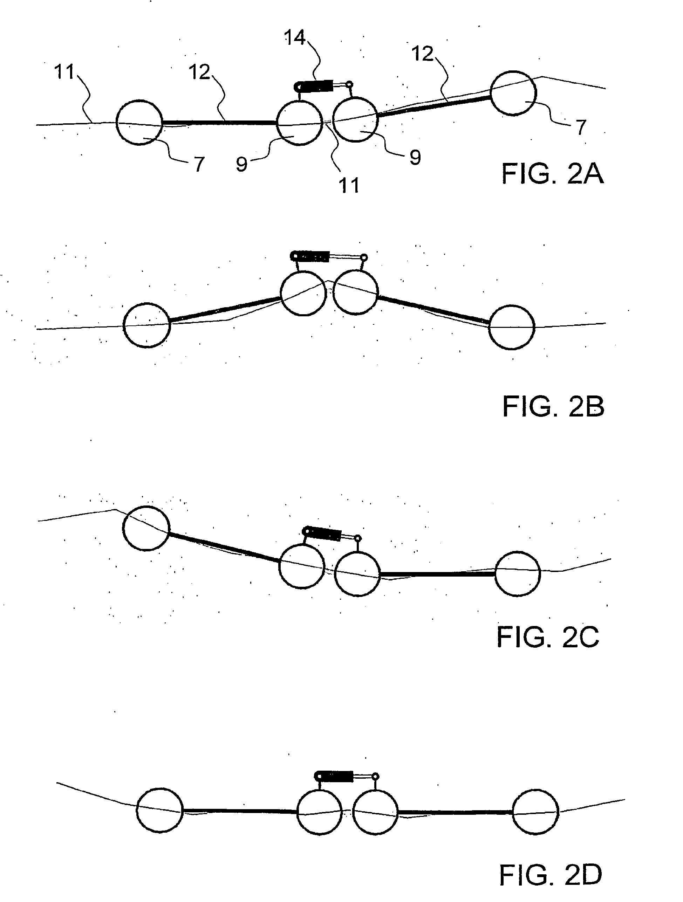

In Fig. 2 appears a wave energy plant 1 schematically with cylindric pontoons 7, 9, where the pontoons are dimensioned so that about half of the pontoons 7, 9 is over and under the waterline 11, respectively. In this Figure, the energy absorbing mechanism 14 is shown as a hydraulic cylinder which by the wave movement of the pontoons 7, 9 is actuated to compression in Figs. 2A and 2C and extension in Fig. 2B, respectively, while in Fig. 2D it is in an intermediate position.

## Claims

1. A wave energy plant of the type intended for placing in open waters, where the wave movement of the water acts on the wave energy plant for movement, where the plant consists of at least two floating bodies (7, 9, 12) that are interconnected via a hinge (10), where the at least two floating bodies are free to move in relation to waves in the water, the movement being transformed into energy by suitable means,and where each floating body is made up of at least two pontoons (7,9), where the pontoons are rigidly connected by rigid members (12),
and at least one energy absorbing mechanism (14) is arranged between two interhinged floating bodies along a hinging line between the two floating bodies wherein the energy absorbing mechanism is a hydraulic system where one or more hydraulic actuators (14) are arranged so that the wave movement of the floating bodies causes a compressing or extension of the hydraulic actuator or actuators, where the actuators are disposed above water level and on a rigid frame (13) which is fixed to the floating bodies and **characterised in that** the at least two floating bodies are connected by a hinge (10) made of a polymer, and the polymer is in the shape of one or more flexible strips which are fastened to each of the two floating bodies in such a way that the two floating bodies are movable by an angle up to between 0° to 50° at each their side in relation to horizontal.

2. Wave energy plant according to any of claims 1, **characterised in that** the hydraulic system includes a hydraulic motor which is connected to an electric generator, a reverse osmosis plant, a desalination plant or another mechanism.

3. Wave energy plant according to any of claims 1 - 2, **characterised in that** the wave energy plant is freely movably anchored to the sea bed and independent of tidal movements.

4. Wave energy plant according to any of claims 1 - 3, **characterised in that** the wave energy plant is provided with at least one control means, preferably a yaw propeller, where the control means is controlled and regulated by means of input from a wave direction gauge.

5. Wave energy plant according to any of claims 1 - 4, **characterised in that** a floating body is made up of pontoons, where the pontoons are made of composite material, including concrete, preferably concrete reinforced by steel or fibres, glass fibre reinforced plastic, carbon fibre or aramide reinforced plastic or other types of composite material.

6. Wave energy plant according to any of claims 1 - 5, **characterised in that** the rigid members between the pontoons are made of one or more of the following groups of materials: metals; fibre composites; plastics.

7. Wave energy plant according to any of claims 1 - 6, **characterised in that** each of the two floating bodies consists of two pontoons interconnected by rigid members, and where the hinge between two floating bodies is mounted between two adjacent pontoons.

8. Wave energy plant according to any of claims 1 - 7, **characterised in that** the hinge is made of a UV-protected polyurethane polymer.

9. Wave energy plant according to any of claims 1 - 8, **characterised in that** the pontoons are cylindrical with a length larger than the diameter.

## Patentansprüche

1. Wellenenergieanlage von dem in offenen Gewässern errichtbaren Typ, wobei die Wellenbewegung des Wassers zu Bewegung auf die Wellenenergieanlage einwirkt, wobei die Anlage wenigstens zwei, durch ein Scharnier (10) miteinander verbundene Schwimmkörper (7, 9, 12) aufweist, wobei die wenigstens zwei Schwimmkörper in Bezug auf die Wellen des Wassers frei beweglich sind, und die Bewegung durch geeignete Mittel in Energie umgesetzt wird, und wobei jeder Schwimmkörper aus wenigstens zwei Pontons (7, 9) gebildet ist, wobei die Pontons durch starre Glieder (12) starr verbunden sind, und wenigstens eine energieabsorbierende Mechanik (14) zwischen zwei miteinander gelenkverbundenen Schwimmkörper entlang einer Scharnierlinie zwischen den beiden Schwimmkörpern angeordnet ist, wobei die energiabsorbierende Mechanik eine Hydraulik ist, wobei ein hydraulisches oder mehrere hydraulischen Betätigungsmittel (14) so angeordnet ist/sind, daß die Wellenbewegung der Schwimmkörper eine Kompression oder Ausdehnung des/der hydraulischen Betätigungsmittel/s verursacht, wobei die Betätigungsmittel über den Wasserpegel und auf einem zu den Schwimmkörpern befestigten starren Rahmen (13) angeordnet sind, **dadurch gekennzeichnet, daß** die wenigstens zwei Schwimmkörper durch ein aus einem Polymer hergestelltes Scharnier (10) verbunden sind, und daß das Polymer in der Form von einem oder mehreren elastischen Streifen vorliegt, der/die zu jedem Schwimmkörper befestigt ist/sind, so daß die beiden Schwimmkörper in einem Winkel zwischen 0° und 50° zur Waagerechten auf ihren jeweiligen Seiten bewegbar sind.

2. Wellenenergieanlage nach Anspruch 1, **dadurch gekennzeichnet, daß** die Hydraulik einen mit einem Stromerzeuger, einer Umkehrosmoseanlage, einer Entsalzungsanlage oder anderen Mechanismus verbundenen Hydromotor umfaßt.

3. Wellenenergieanlage nach irgendeinem der Ansprüche 1-2, **dadurch gekennzeichnet, daß** die Wellenenergieanlage unabhängig von Gezeitenbewegungen zum Meeresboden frei beweglich verankert ist.

4. Wellenenergieanlage nach irgendeinem der Ansprüche 1-3, **dadurch gekennzeichnet**, net, daß die Wellenenergieanlage mit wenigstens einem Steueungsmittel, vorzugsweise einem Gierungsschraube, versehen ist, wobei das Steuerungsmittel durch Eingaben aus einem Wellenrichtungs-meßgerät gesteuert wird.

5. Wellenenergieanlage nach irgendeinem der Ansprüche 1-4, **dadurch gekennzeichnet, daß** ein Schwimmkörper aus Pontons gebildet ist, wobei die Pontons aus einem Verbundwerkstof einschließlich Beton, vorzugsweise stahl- oder faserverstärktem Beton, glasfaserverstärktem Kunststoff, kohlenstofffaser- oder aramidverstärktem Kunststoff oder anderen Verbundwerkstoff-typen hergestellt sind.

6. Wellenenergieannlage nach irgendeinem der Ansprüche 1-5, **dadurch gekennzeichnet, daß** die starren Glieder zwischen den Pontons aus einer oder mehreren der folgenden Werkstoffgruppen herstellt sind: Metalle; Faserverbundwerkstoffe; Kunststoffe.

7. Wellenenergieanlage nach irgendeinem der Ansprüche 1-6, **dadurch gekennzeichnet, daß** jeder der beiden Schwimmkörper aus zwei, durch starre Glieder miteinander verbundene Pontons besteht, und wobei das Scharnier zwischen zwei Schwimmkörpern zwischen zwei benachbarten Pontons angeordnet ist.

8. Wellenenergieanlage nach irgendeinem der Ansprüche 1-7, **dadurch gekennzeichnet, daß** das Scharnier aus einem UV-geschützten Polyurethanpolymer hergestellt ist.

9. Wellenenergieanlage nach irgendeinem der Ansprüche 1-8, **dadurch gekennzeichnet, daß** die Pontons eine Zylinderform mit größere Länge als der Durchmesser aufweisen.

## Revendications

1. Installation d'exploitation de l'énergie des vagues du type destiné à la mise en place dans des eaux libres, où le mouvement des vagues de l'eau agit sur l'installation d'exploitation de l'énergie des vagues pour le mouvement, où l'installation est constituée d'au moins deux corps flottants (7, 9, 12) qui sont reliés l'un à l'autre par l'intermédiaire d'une charnière (10), où les au moins deux corps flottants sont libres de se déplacer par rapport aux vagues dans l'eau, le mouvement étant transformé en énergie par des moyens appropriés, et où chaque corps flottant est constitué d'au moins deux pontons (7, 9), où les pontons sont reliés de manière rigide par des éléments rigides (12) et au moins un mécanisme d'absorption d'énergie (14) est disposé entre deux corps flottants articulés le long d'une ligne d'articulation entre les deux corps flottants, le mécanisme d'absorption d'énergie constituant un système hydraulique dans lequel un ou plusieurs actionneurs hydrauliques (14) sont disposés de telle manière que le mouvement des vagues des corps flottants provoque une compression ou une extension de l'actionneur hydraulique ou des actionneurs, où les actionneurs sont disposés au dessus du niveau de l'eau et sur un cadre rigide (13) qui est fixé aux corps flottants et **caractérisée en ce que** les au moins deux corps flottants sont reliés par une charnière (10) constituée d'un polymère, et le polymère est sous la forme d'une ou de plusieurs bandes flexibles qui sont fixées à chacun des deux corps flottants de telle sorte que les deux corps flottants sont déplaçables d'un angle jusqu'à entre 0 ° à 50 ° des deux côtés par rapport à l'horizontale.

2. Installation d'exploitation de l'énergie des vagues selon l'une quelconque des revendications 1, **caractérisée en ce que** le système hydraulique comprend un moteur hydraulique qui est relié à un générateur électrique, une installation à osmose inverse, une usine de dessalement ou un autre mécanisme.

3. Installation d'exploitation de l'énergie des vagues selon l'une quelconque des revendications 1 à 2, **caractérisée en ce que** l'installation d'exploitation de l'énergie des vagues est ancrée au fond de la mer de façon librement déplaçable et indépendant des marées.

4. Installation d'exploitation de l'énergie des vagues selon l'une quelconque des revendications 1 à 3, **caractérisée en ce que** l'installation d'exploitation de l'énergie des vagues est pourvue d'au moins un moyen de commande, de préférence une hélice d'embardée, où le moyen de commande est commandé et régulé au moyen d'une entrée provenant d'une jauge de direction des vagues.

5. Installation d'exploitation de l'énergie des vagues selon l'une quelconque des revendications 1 à 4, **caractérisée en ce qu'**un corps flottant est constitué de pontons, où les pontons sont faits en matériau composite, comprenant du béton, de préférence du béton renforcé par des fibres ou en acier, de la plastique renforcée de fibre de verre, de la fibre de carbone ou de la plastique renforcée d'aramide ou d'autres types de matériau composite.

6. Installation d'exploitation de l'énergie des vagues selon l'une quelconque des revendications 1 à 5, **caractérisée en ce que** les éléments rigides entre les pontons sont constitués d'un ou plusieurs des groupes suivants de matières: des métaux; des composites de fibres; des matières plastiques.

7. Installation d'exploitation de l'énergie des vagues selon l'une quelconque des revendications 1 à 6, **caractérisée en ce que** chacun des deux corps flottants est constitué de deux pontons reliés l'un à l'autre par des éléments rigides, et où la charnière entre deux corps flottants est montée entre deux pontons adjacents.

8. Installation d'exploitation de l'énergie des vagues selon l'une quelconque des revendications 1 à 7, **caractérisée en ce que** la charnière est constituée d'un polymère de polyuréthane protégée contre les UV.

9. Installation d'exploitation de l'énergie des vagues selon l'une quelconque des revendications 1 à 8, **caractérisée en ce que** les pontons sont cylindriques avec une longueur plus grande que le diamètre.
